# EUROPÄISCHE PATENTANMELDUNG

(11) **EP 2 650 579 A2**
(43) Veröffentlichungstag der Anmeldung: **16.10.2013**
(21) Anmeldenummer: 13001839.3
(22) Anmeldetag: 09.04.2013
(51) Int. Cl.: F16L 23/028, F16L 23/036

(54) **Lösbare Verbindung von rotationssymmetrischen Bauteilen**

(30) Priorität: 12.04.2012 DE 102012007145
(71) Anmelder: Schlemenat, Alfred W., 45701 Herten (DE)
(72) Erfinder: Schlemenat, Alfred W., 45701 Herten (DE)

(57) **Zusammenfassung**

Eine Hülse (5) übergreift die zu verbindenden Bauteile (2, 3), keilförmige Spannelemente (6) sind zwischen der Hülse (5) einem der Bauteile (2, 3) durch Spannmittel (7) verspannt. Zwischen den Spannelementen (6) und der Hülse (5) sind Ausgleichsstücke (10) angeordnet. Diese werden durch Spannmittel (7) über die keilförmigen Elemente (6) radial und axial in die Hülse gedrückt. Die Elemente weisen zwischen ihren Verspannflächen und ihrer Verspannachse (9) einen Winkel auf, der nicht größer ist als der Haftreibungswinkel der reibschlüssig zusammenwirkenden Materialien.

## Beschreibung

Die Erfindung betrifft eine lösbare Verbindungsanordnung zur kraft- und formschlüssigen Verbindung von rotationssymmetrischen paarigen oder unpaarigen Bauteilen, insbesondere für extrem belastete Verbindungen von Rohr- oder Zylinderenden untereinander, für Verbindungen an Maschinen- / Armaturengehäusen sowie von Rohr- / Zylinderenden mit einem dem Verwendungszweck entsprechend konstruktiv ausgebildeten Verschlußdeckel, ferner für Verbindungen an lsoliertrennstellen im Pipelinebereich sowie für Verbindungen von Großwälzlagem mit der Anschlußkonstruktion gemäß dem Oberbegriff der Ansprüche 1 und 2.

Aus den Europäischen Patenten EP 0 775 863 B1 und EP 1 010 931 B1 ist eine kraft- und formschlüssige Verbindungsanordnung bekannt. Diese stellt eine kompakte Bauart dar. Sie führt zu günstigen Bauteilgewichten. Das nach dem Erfinder benannte Verbindungssystem *"Schlemenat"* ist an Stelle aller rotationssymmetrischen Verbindungen einzusetzen, wobei unabhängig vom Einsatzbereich, der konstruktiven Gestaltung oder der Betriebstemperatur höchste Belastungen dauerhaft und sicher übertragen werden.

Wie nachfolgend dargestellt, kann die Verbindung bei einer korrekten Dimensionierung nicht versagen. Zum Nachweis wurden Tests an einer umgestalteten 325 bar-Rohrleitungsverbindung durchgeführt. Die Wandstärke der Rohre betrug 25 mm, der Probedruck sollte zum Herausfinden möglicher Schwachstellen der Verbindung bis zum Versagen erhöht werden. Bei mehr als dem 5-fachen des Betriebsdrucks, bei 1750 bar mußte der Test jedoch abgebrochen werden, da nicht die Verbindung, sondern die Rohrkörper kurz vor dem Zerbersten standen. Die zusammenwirkenden Bauteile der Verbindung wiesen dagegen keine Veränderungen auf. Die in jeder Hinsicht spektakulären Testergebnisse setzen somit für alle Anwendungsbereiche neue Maßstäbe, sie zeigen eindrucksvoll, dass sogar die Belastungen sicher übertragen werden, die zum Versagen der Anschlußkonstruktionen führen.

Die kennzeichnenden Merkmale der EP 1 010 931 B1 führen gegenüber der EP 0 775 863 B1 zu Fertigungsvorteilen sowie zu einer Minimierung der Lebenszykluskosten, an einer Vielzahl von Ausführungsvarianten ist dieses jedoch nicht zu nutzen. Insgesamt erschweren relativ hohe Herstellungskosten eine effiziente Vermarktung dieser Verbindungsanordnung.

Zwischen den zu verbindenden Bauteilen erzeugen keilförmig verspannte Elemente einen Kraft- und Formschluß. Die Elemente weisen zwischen ihren Verspannflächen und ihrer Verspannachse einen Winkel auf, der nicht größer ist als der Haftreibungswinkel der reibschlüssig zusammenwirkenden Materialien. Er stellt die Selbsthemmung der verspannten Bauteile sicher, so dass Kräfte / Momente ausschließlich durch Reibschluß übertragen werden. Relativ kleine Schrauben, mit denen zuvor der verspannte Zustand erzeugt wurde, verhindern den Übergang von der Haft- zur Gleitreibung.

Zur Übertragung der Belastungen durch Haftreibung müssen die keilförmigen Elemente jedoch stets vollflächig mit ihren balligen Flächen in der übergreifenden Hülse anliegen. Dieses erfordert stets eine exakte Positionierung der Elemente sowohl in radialer als auch in axialer Richtung. Vor allem bei größeren Durchmessern, beispielsweise an Verbindungen im Offshore-Bereich sowie bei Großwälzlagern mit der Anschlusskonstruktion sind minimale Fertigungstoleranzen einzuhalten. Eine wirtschaftliche Herstellung größerer Bauteile ist daher nahezu ausgeschlossen.

In der Kraftwerkstechnik bestehen an fest in Rohrleitungssystemen eingeschweißten Regelungsaggregaten die Forderungen zur Nachbearbeitung von beschädigten Funktionsflächen, die beispielsweise durch Hochtemperaturkorrosion oder Verzunderungen entstanden sind. An weiteren fest in Rohrleitungssystemen eingeschweißten Aggregaten mit selbstdichtenden Segment-Ring-Konstruktionen, den sogenannten Uhde-Brettschneider-Verschlüssen führt Extrusion / Spalteinwanderung des Dichtungsmaterials infolge fertigungsbedingter Bauteiltoleranzen dazu, dass die Bauteile selbst unter größtem Kraftaufwand nur schwer oder gar nicht zu demontieren sind. Ein Nachbearbeiten der Funktionsflächen durch eine Vor-Ort-Bearbeitung mit mobilen Bearbeitungsmaschinen ist zur Beseitigung dieser Probleme nicht möglich, die eine veränderte axiale Lage der keilförmigen Elemente eine Übertragung der Belastungen durch Haftreibung ausschließt.

An Verbindungen von vollverschweißten lsoliertrennstellen im Pipelinebereich wirken auf die im Kraftfluss liegenden Isolierkörper funktionsbedingt Belastungen, die nach längeren Betriebszeiten infolge des Relaxationseinflusses zu Stauchungen der Isolierkörper führen. Folglich stellen sich gegenüber dem Montagezustand axiale Längendifferenzen ein, die von der Dichtung kompensiert werden müssen. Weist die Dichtung nicht mehr die erforderliche Vorverformung auf, ergeben sich zwangsläufig Undichtigkeiten mit enormen Folgen. Ein Auswechseln der durch Stauchung, gegebenenfalls durch Blitzschlag oder Erdbeben beschädigten Isolierkörper und Dichtungen erfordert somit das Öffnen der gegenwärtigen vollverschweißten Baueinheiten. Das Trennen sowie das erneute Verschweißen erfordert zur Vermeidung von Explosionsgefahren aufwendige und kostspielige Maßnahmen.

Aufgabe der Erfindung ist es, eine Verbindungsanordnung der angegebenen Art so auszugestalten, dass mit mobilen Bearbeitungsmaschinen Funktionsflächen an Aggregaten nachzuarbeiten sind, dass große und extrem belastete Bauteile unter Nutzung der allgemeinen Herstellungstoleranzen wirtschaftlicher zu fertigen sind, dass an Isoliertrennstellen im Pipelinebereich die nach längeren Betriebszeiten reduzierte Dichtungspressung durch ein Nachspannen zu kompensieren ist und dass beschädigte Isolierkörper und Dichtungen im Rahmen einer vorbeugenden Instandhaltung zu überprüfen und gegebenenfalls auszutauschen sind, ohne dass Maßnahmen zur Vermeidung von Explosionsgefahren erforderlich werden.

Die Aufgaben werden erfindungsgemäß durch die in Anspruch 1 - 3 angegebenen Verbindungsanordnungen gelöst.

Zwischen der Hülse und jedem der keilförmigen Spannelemente wird jeweils ein Ausgleichsstück angeordnet. Dieses weist in Richtung der Verbindungsebene eine keilförmige Anlagefläche auf, welche zur Längsachse der Verbindung den gleichen Neigungswinkel aufweist, wie er durch die Keilfläche des Spannelements im verspannten Zustand zur Längsachse gegeben ist. Die in axialer Richtung gegenüberliegende Fläche am Ausgleichsstück liegt an einer radial verlaufenden Anschlagfläche der Hülse an. Zur Hülsenwand liegt das Ausgleichsstück an dieser an, so dass die vom Spannmittel während der Montage erzeugte Verspannkraft über die Keilwirkung der Spannelemente auf das Ausgleichsstück wirkt und dieses sowohl radial gegen die Hülsenwand als auch axial gegen die Anschlagfläche der Hülse drückt. Infolge Haftreibung wirken die zu übertragenden Betriebsbelastungen sowohl über das jeweilige keilförmige Spannelement als auch über das verkeilte Ausgleichsstück auf die Hülse und somit auf das zu verbindende Bauteil.

Die erfindungsgemäße Verbindungsanordnung erfordert gegenüber einer relativ schmalen umlaufenden Nut jedoch eine in axialer Richtung verlängerte Aussparung in der übergreifenden Hülse zur Aufnahme der Ausgleichsstücke und der Spannelemente. Um sicherzustellen, dass diese gegenüber der EP 0 775 863 B1 / EP 1 010 931 B1 nicht zu einem Verformungsverhalten führt, welches sich auf das Tragverhalten und die Dichtheit der Verbindung negativ auswirken könnte, wurden für sämtliche Belastungssituationen Finite-Element-Verformungsanalysen erstellt. Die Ergebnisse zeigen die Überlegungen zur Lösung der Aufgabenstellungen des Erfindungsgegenstands. Mit Zunahme der Betriebsbelastung verkeilen sich die Ausgleichsstücke zwischen der radial ebenen Anlagefläche der Hülse und den Spannelementen.

Eine in der Hülse radial verlaufende ebene Anlagefläche zur Anlage der Spannelemente ist sowohl bei Neukonstruktionen als auch an vorhandenen Ausführungen mit mobilen Bearbeitungsmaschinen relativ einfach und kostengünstig herzustellen. Die radial ebenen Flächen sind vergleichbar mit der umlaufenden Nut eines Segmentverschlusses, sie entsprechen den allgemeinen Stand der Technik. Standardmäßig gelangen umlaufende Nuten auch zur Anwendung an Sicherungselementen mit sogenannten Sprengringen. Zur mobilen Nachbearbeitung der radial verlaufenden Anlageflächen haben sich daher eine Vielzahl von im direkten Wettbewerb zueinander stehenden Firmen mit unterschiedlichen Vorrichtungen und Maschinen spezialisiert.

Die erfindungsgemäße Ausgestaltung dieser Verbindungsanordnung ermöglicht es somit, beschädigte Funktionsflächen mit mobilen Bearbeitungsmaschinen nachzuarbeiten. Ein in axialer Richtung auszugleichender Differenzbetrag ist durch relativ kostengünstig herzustellende Ausgleichsstücke und über den Spannweg der keilförmigen Elemente auszugleichen. Um auszuschließen, dass diese in der Hülse nicht auf Block gezogen werden, ist ein vergrößerter Freiraum hinter den Spannelementen vorzusehen. Vor allem für Verbindungen in größeren Durchmesserbereichen sowie an Großwälzlagerverbindungen sind die Bauteile der Verbindungen unter Nutzung der allgemeinen Fertigungstoleranzen kostengünstig herzustellen. Insgesamt ergeben sich wirtschaftliche Vorteile, die zu einer effizienteren Vermarktung dieser Verbindungsanordnung führen.

Analog dazu werden unter gleichzeitiger Erhöhung der Verspannungssicherheit Möglichkeiten geschaffen, Verbindungen an Isoliertrennstellen im Rahmen einer vorbeugenden Instandhaltung zu kontrollieren und gegebenenfalls nachzuspannen. Nach dem Lösen der Spannelemente und dem Zurückschieben der übergreifenden Hülse ist ein freier Zugang zu den Isolierkörpern und Dichtungen gegeben. Diese können problemlos kontrolliert und gegebenenfalls ausgewechselt werden, wenn eine Beschädigung durch Stauchung, Blitzschlag oder Erdbeben vorliegt. Vor allem im Pipelinebereich sind aufwendige und kostspielige Maßnahmen zur Vermeidung von Explosionsgefahren nun gegenstandslos.

Die Ausgleichsstücke können zur Montagevereinfachung beispielsweise mit handelsüblichen Verbindungselementen an der übergreifenden Hülse fixiert werden.

Zum Erzeugen der erforderlichen Verspannkraft sind analog der EP 1 010 931 B1 neben Schrauben als Verspannmittel weitere mechanisch wirkende Bauteile sowie hydraulisch, pneumatisch, elektrisch oder entsprechend thermisch wirkende Aggregate zu nutzen, die einzeln oder in Kombination zueinander zur Anwendung gelangen können. Ebenso sind für alle Durchmesser- und Anwendungsbereiche die Spannelemente wirtschaftlich vorteilhaft aus Flachmaterial herzustellen, welches eine Standardisierung, Serienherstellung und Lagerhaltung sicherstellt. In axialer Richtung können Distanzringe mit verspannt werden, um gegebenenfalls größere Differenzen auszugleichen oder um Dichtungen aufzunehmen.

Drei Ausführungsbeispiele der Erfindung werden anhand einer schematischen Zeichnung dargestellt und beschrieben.

Es zeigen:
- Fig.1: den Längsschnitt einer Verbindungsanordnung von zwei Rohr- oder Zylinderenden einer paarigen Verbindung.
- Fig.2: den Längsschnitt einer Verbindungsanordnung von zwei Rohr- oder Zylinderenden einer unpaarigen Verbindung.
- Fig.3: ein mit der Anschlußkonstruktion verspanntes Großwälzlager, dargestellt in einem Längsschnitt

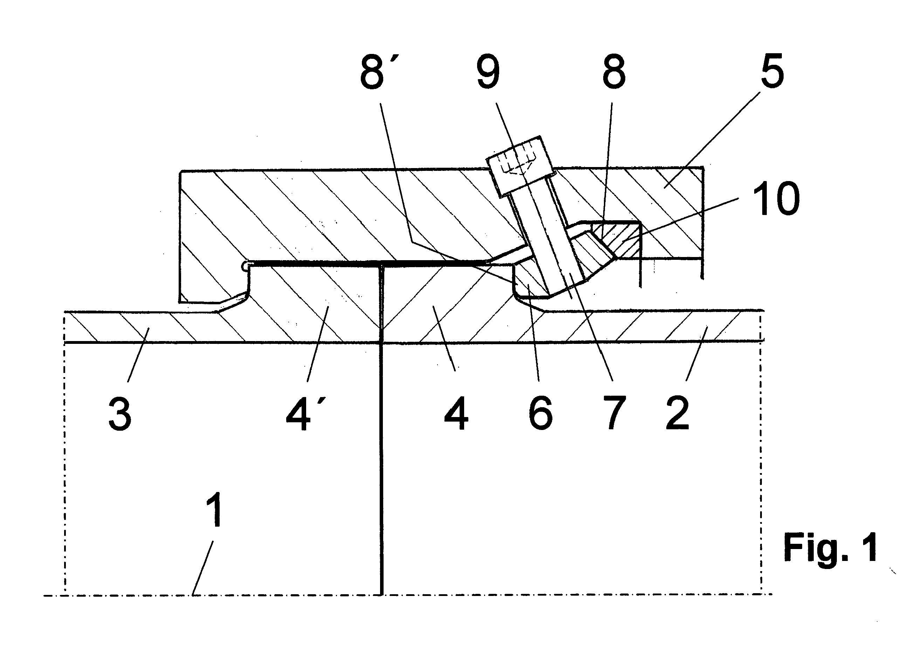

Fig. 1 zeigt in einem Längsschnitt eine paarige Verbindungsanordnung von zwei zylindrischen Bauteilen (2, 3). Diese weisen je einen radial nach außen gerichteten Bund (4, 4') auf. Eine Hülse (5) übergreift beide Bunde. Zwischen dieser und dem Bund (4) des Bauteils (2) sind keilförmige Spannelemente (6) angeordnet. Diese weisen zwischen ihren Keilflächen (8, 8') und ihren Mitten- / Verspannachsen (9) einen Winkel auf, der nicht größer ist als der Haftreibungswinkel der reibschlüssig zusammenwirkenden Materialien. Zwischen der Hülse (5) und den keilförmigen Spannelementen (6) sind Ausgleichsstücke (10) angeordnet, deren Anlageflächen zum Spannelement (6) einen Neigungswinkel zur Längsachse (1) der Verbindung aufweisen, wie er durch den Winkel der Keilfläche (8) des Spannelements (6) zur Längsachse (1) gegeben ist. In diesem Ausführungsbeispiel drücken Schrauben als Spannmittel (7) über die keilförmigen Spannelemente (6) die Ausgleichsstücke (10) radial und axial in die Hülse (5).

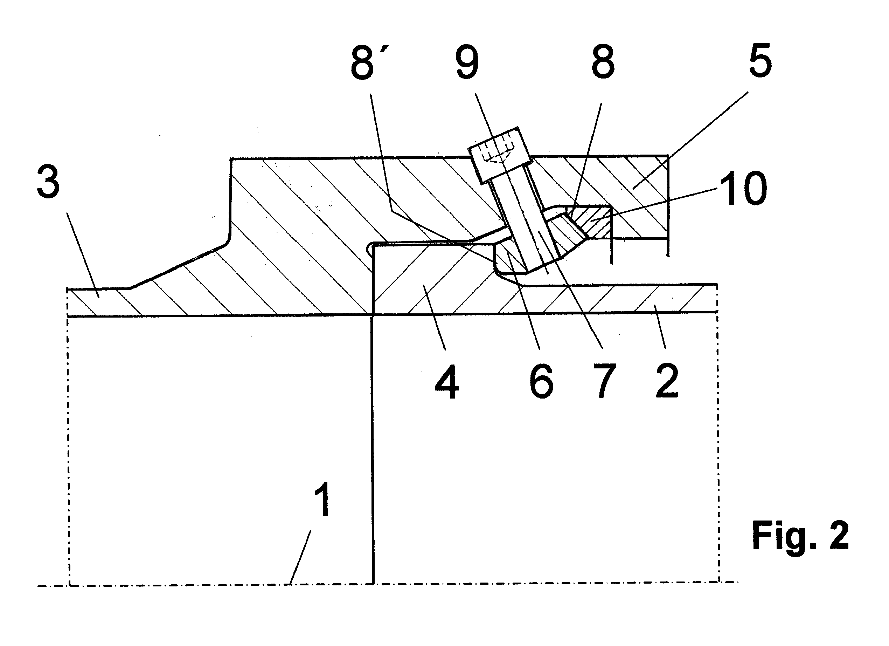

Fig. 2 zeigt analog zur Fig. 1 den Längsschnitt einer unpaarigen Verbindung mit einer an dem Bauteil (3) fest angeordneten Hülse (5). Diese umfaßt das Bauteil (2) mit einem an diesen angearbeiteten Bund (4). Schrauben als Spannmittel (7) drücken über die keilförmigen Spannelemente (6) die Ausgleichsstücke (10) radial und axial in die Hülse (5).

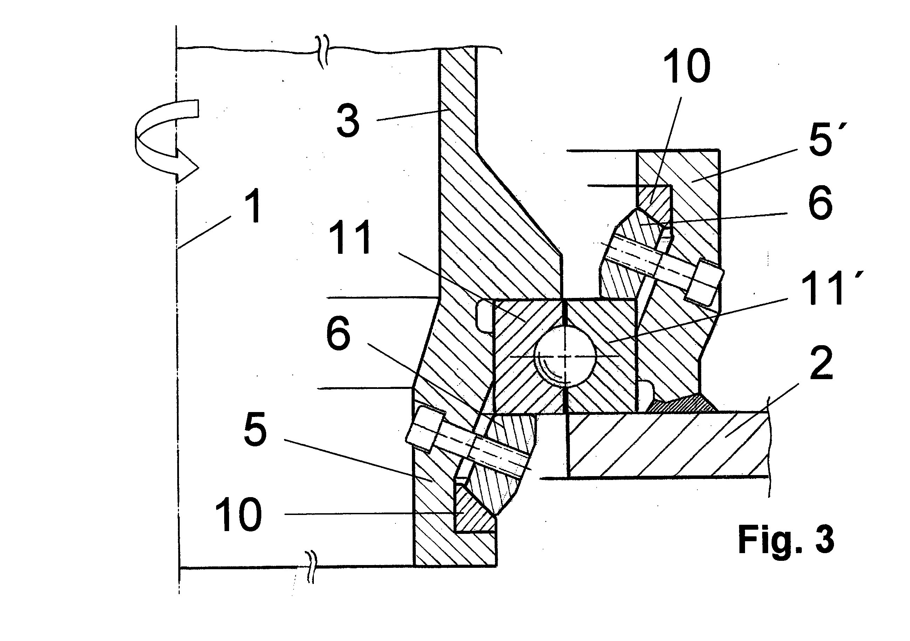

Fig. 3 zeigt in einem Längsschnitt die Verbindung von einem einreihigen Großwälzlager zur feststehenden (2) und zur drehbaren Anschlusskonstruktion (3). Das Großwälzlager weist einen Innenring (11) und Außenring (11') auf. Mit Schrauben als Spannmittel (7) ist der Innenring (11) mit der radial nach innen übergreifenden Hülse (5) des drehbaren Bauteils (3) und der Außenring (11') mit der radial nach außen übergreifenden Hülse (5') des feststehenden Bauteils (2) durch die keilförmigen Spannelemente (6) über die jeweiligen Ausgleichsstücke (10) verspannt.

### Bezugsziffernliste:

| | |
|---|---|
| 1 | Längsachse der Verbindung |
| 2, 3 | zylindrische Anschlußkonstruktion |
| 4, 4' | radial nach außen oder nach innen ausgebildeter Bund |
| 5, 5' | radial nach außen oder nach innen ausgebildete Hülse |
| 6 | Spannelement |
| 7 | Schrauben als Spannmittel |
| 8, 8' | Flächen am Spannelement |
| 9 | Mitten- / Verspannachse der Spannmittel |
| 10 | Ausgleichsstück |
| 11, 11' | Innen- und Aussenring eines Großwälzlagers |

## Patentansprüche

1. Lösbare kraft- und formschlüssige Verbindung mit zwei auf einer Längsachse (1) angeordneten paarigen Bauteilen (2, 3),
mit einem radial nach außen oder innen vorspringenden Bund (4) oder Ring an dem einen Bauteil (2),
mit einem radial nach außen oder innen vorspringenden Bund (4') oder Ring an dem anderen Bauteil (3),
mit einer Hülse (5), die beide Bunde (4, 4') oder Ringe axial übergreift und mit einer Anzahl von keilförmigen Spannelementen (6), die zwischen der Hülse (5) und einem der Bauteile (2, 3) durch Spannmittel (7) verspannt sind, wobei die keilförmigen Spannelemente (6) zwischen ihren Keilflächen (8, 8') und ihren Mitten- / Verspannachsen (9) einen Winkel aufweisen, der nicht größer als der Haftreibungswinkel der reibschlüssig zusammenwirkenden Materialien ist,
**dadurch gekennzeichnet, dass**
zwischen der Hülse (5) und jedem der keilförmigen Spannelemente (6) ein Ausgleichsstück (10) angeordnet ist,
dass die Anlagefläche des Ausgleichsstücks (10) zum jeweiligen Spannelement (6) einen Winkel zur Längsachse (1) der Verbindung aufweist, wie er durch den Winkel der Keilfläche (8) des Spannelements (6) zur Längsachse (1) gegeben ist
und dass die Spannmittel (7) über die keilförmigen Spannelemente (6) mit den Ausgleichsstücken (10) derart zusammenwirken, dass sie diese radial und axial in die Hülse (5) hineindrücken.

2. Lösbare kraft- und formschlüssige Verbindung mit zwei auf einer Längsachse (1) angeordneten unpaarigen Bauteilen (2, 3),
mit einem radial nach außen oder innen vorspringenden Bund (4) oder Ring an dem einen Bauteil (2),
mit einer an dem anderen Bauteil (3) radial nach innen oder außen lösbar oder fest angeordneten Hülse (5), die den Bund (4) oder Ring axial übergreift
und mit einer Anzahl von keilförmigen Spannelementen (6), die zwischen der Hülse (5) und dem einen Bauteil (2) durch Spannmittel (7) verspannt sind, wobei die keilförmigen Spannelemente (6) zwischen ihren Keilflächen (8, 8') und ihren Mitten- / Verspannachsen (9) einen Winkel aufweisen, der nicht größer als der Haftreibungswinkel der reibschlüssig zusammenwirkenden Materialien ist,
**dadurch gekennzeichnet, dass**
zwischen der Hülse (5) und jedem der keilförmigen Spannelemente (6) ein Ausgleichsstück (10) angeordnet ist,
dass die Anlagefläche des Ausgleichsstücks (10) zum jeweiligen Spannelement (6) einen Winkel zur Längsachse (1) der Verbindung aufweist, wie er durch den Winkel der Keilfläche (8) des Spannelements (6) zur Längsachse (1) gegeben ist
und dass die Spannmittel (7) über die keilförmigen Spannelemente (6) mit den Ausgleichsstücken (10) derart zusammenwirken, dass sie diese radial und axial in die Hülse (5) hineindrücken.

3. Verbindungsanordnung nach Anspruch 2,
**dadurch gekennzeichnet, dass**
das zu verspannende Bauteil jeweils der Innenring (11) oder der Außenring (11') eines Großwälzlagers ist
und dass diese jeweils mit einer radial nach innen oder radial nach außen übergreifenden Hülse (5, 5') durch die keilförmigen Spannelemente (6) über die Ausgleichsstücke (10) mit dem einen Bauteil (2) und dem anderen Bauteil (3) verspannbar sind.
